# EUROPEAN PATENT APPLICATION

(11) **EP 4 364 562 A1**
(43) Date of publication of application: **08.05.2024**
(21) Application number: 23208384.0
(22) Date of filing: 07.11.2023
(51) Int. Cl.: A01M 7/00

(54) **APPARATUS AND METHOD FOR DISPENSING PLANT PROTECTION PRODUCTS**

(30) Priority: 07.11.2022 IT 202200022887
(71) Applicant: O.C.L.L. S.r.l., 35010 Villanova di Camposampiero (PD) (IT)
(72) Inventor: CARRARO, Maurizio, 35012 Camposampiero (PD) (IT); TAMAGNONE, Mario, 10046 Poirino (TO) (IT)
(74) Representative: Mincone, Antimo

(57) **Abstract**

The invention relates to an apparatus (1) and a method for dispensing plant protection products on tree crops; the apparatus (1) comprises: a support structure that can be associated with a motorization means (T), a turbine group (3) capable of determining a flow of air, said turbine group (3) being connected to a plurality of diffusers (51 , 52, 53); a first tank (40); a pump (2); a central processing unit (UC) equipped with a memory (M) with a database relating to the areas to be treated on which to deliver the plant protection products and connected to a localization device (GPS); the central processing unit (UC) is connected to the pump (2) and/or to said turbine group (3) and/or to said plurality of diffusers (51, 52, 53) so as to regulate the delivery of plant protection products in function of the data contained in the memory (M) and the position detected by the localization device (GPS).

## Description

The present invention fits into the field of apparatuses and systems for carrying out phytosanitary treatments. In particular, the invention relates to an apparatus and a method for the delivery of plant protection products on tree crops.

The innovative aspects of the invention will be described below together with the related advantages.

In particular, as will be better described below, the apparatus in question includes an atomizer equipped with a management system capable of providing operational indications in each phase of the phytosanitary treatment; in this way the apparatus and method object of the invention allow the correct quantity of plant protection product to be distributed on tree crops in relation to different factors such as, for example, the area in which the plants subject to treatment are located, the period of supply, the growth of the plant, the possible state of ripeness of the fruit present, the treatments previously carried out and those to be carried out subsequently, the type and percentage of product to be dispensed, etc.

Carrying out the distribution of plant protection products to tree crops is an operation repeated many times within the crop cycle (in some cases up to 25 interventions/year), potentially dangerous for the operator and the environment and economically costly. In some situations, a distribution intervention can last a few consecutive days (3-4) and can involve many distribution units at the same time (7-8).

Within this operational framework there is a limited availability of electronic devices aimed at improving the management of these interventions on tree crops.

One of the current limits to the optimization of distribution on tree crops is the static nature of the distribution system: the atomizer has a specific number of nozzles of a certain size and the possibility of varying the quantity of liquid distributed is linked only to the variation of the operating pressure. Furthermore, the intensity of the airflow is generally constant.

The dosage of the pesticide to be introduced into the tank during refuelling is always managed by the operator without any assistance, with considerable possibility of error. Errors in this phase can also cause significant damage (such as, for example, overdose which can lead to exceeding the residue limit allowed on the final product and/or to the involuntary dispersion of the pesticide into the environment).

In practice, the precision of the distribution is exclusively linked to the skill and attention that the operator can have for the entire duration of the work.

EP3944761A1 relates to a fluid atomizing machine comprising a detection device with at least one sensor, preferably a radar sensor, configured to determine the presence of a target constituted by a tree. The EP3944761A1 machine is equipped with a processing unit that receives data from the sensor and processes the data provided by the sensor to calculate the fluid flow rates by activating the delivery nozzles based on the position of the shaft. In practice, according to EP3944761A1, the machine must recognize a target (the tree) through a sensor and the treatment performed is based on the detection performed by the aforementioned sensor. In other words, with EP3944761A1 there is a "live target recognition", with a distribution that would become unmonitorable in the event of a sensor malfunction because there would be no useful elements to detect it and, therefore, negatively, the quality of the distribution, and therefore its effectiveness could be compromised.

According to the present invention, however, the system memorizes all the plots of land on which the treatment is to be carried out.

For each plot, a prescription map is developed relating to the volume of liquid to be distributed and another map relating to the regulation of the fan which determines the flow of the turbine unit. The map is also used to manage automatic opening/closing at the beginning/end of the row.

The maps are updated according to the seasonal development of the crop, using specific functions included in the software.

The software that equips the central unit of the apparatus also allows assistance with the preparation of supplies (necessary quantity), the preventive calculation of the quantity of water and pesticide (also working in variable dosage) and the programming of the work according to the surface of plots and tank capacity.

The system can be programmed on a daily basis: depending on the plots intended to be treated, it will provide the estimated end time of the activity, the quantity of water and pesticide(s) required.

All these functions can be active even in the case of multiple operating units (apparatuses), each with its own identifier.

During the distribution of the pesticide mixture, the work carried out can be highlighted on a screen. Advantageously, distribution can be facilitated by allowing one or two rows to be skipped and treated later, with no margin for error. In fact, among the advantages the following can be mentioned: reduction of turning times, reduction of contamination of the tractor because it does not have to travel along an inter-row close to the one just treated and therefore with the presence of droplets suspended in the air. Furthermore, the deposit is improved as it is always sprayed on dry vegetation, with less chance of dripping.

All the work done will be saved, to allow a final check and to create an archive of the treatments performed.

To manage these functions, the system is equipped with a GPS georeferencing device.

To ensure flexibility in the management of vertical distribution profiles (distribution of the liquid dispensed according to the altitude) the system is able to independently manage the nozzles according to the altitude (for example with division into three nozzles for each dispensing point as in the attached non-limiting drawing).

The liquid distribution profile can be unique for the entire plot under treatment. The quantity to be dispensed (l/ha - liters per hectare) is obtained from the map and managed according to the set profile.

The system automatically manages the opening of the nozzles to obtain the required profile and volume. If it is impossible to achieve the desired objective, distribution is interrupted.

Delivery management is provided based on the forward speed, with the possibility of automatic closing at the end of the row.

Automatic management of the edge row (the row located along an external edge of the plot) is also provided, with the possibility of not providing any supply (liquid and air) on the external side.

It is possible to carry out a dispensed/set check, with a periodic comparison between the quantity dispensed (incremental flowmeter and quantity present in the tank) and the quantity determined using the distribution map. If the difference is greater than a certain alarm "parameter", an automatic stop is possible.

The system however allows the possibility of forcing the alarms to end the plot.

Furthermore, an end-of-distribution function is provided which determines a variation in the volume distributed within a percentage established by the "parameter" to end with an empty tank (for example, it is possible to slightly increase the volume in case of water surplus, or reduction in case of water shortage). In other words, the system allows you to compensate for errors that have accumulated during the treatment but which are within acceptable limits.

In accordance with the invention it is also possible to control the management of the air flow. The distribution profile (distribution of air speed as a function of altitude) can be unique for the entire plot. The air speed is obtained from the map and varied in proportion.

The air speed can also be varied according to the forward speed.

During turning operations the fans are turned off together with the nozzles (so as to save energy) and are turned back on a little before the nozzles to ensure correct coverage of the beginning of the row (in standard sprayers the fan instead rotates continuously for the entire duration of work).

The right/left air flow can be balanced according to the transversal speed of the wind using the data provided by the wind sensor (speed and direction) and the treatment will be blocked with speed above the threshold.

In accordance with the present invention, it is possible to prepare the water/pesticide mixture according to the plot.

The software will perform calculations relating to expected water consumption and suggest the correct quantity to load each time to avoid carrying unnecessary liquid. There will be a positive impact on limiting soil compaction and on the energy consumption necessary to tow the machine.

The sprayer communicates with the mixer (the device that facilitates the introduction of pesticides into the sprayer tank by determining the percentage of drug in the volume of mixture dispensed) to facilitate filling.

All calculation functions are on the central unit of the spraying equipment. The mixer displays the messages provided by the sprayer.

When the sprayer approaches the mixer, communication is activated and indications relating to the quantity of pesticide to be inserted appear on the mixer display (number of containers with possible photo). On the mixer there is a start button and an emergency stop button. (possible option to program the quantity of water for independent use).

The mixer stops automatically depending on the quantity requested by the machine, with an alarm before it ends; this last feature is particularly useful if the quantity to be loaded is low, in order to have sufficient time to wash the empty containers and therefore have the pipes with only water present in order to safeguard the safety of the operations.

A cross-check between the mixer flow meter and the tank level sensor is also possible to highlight any leaks during refuelling.

The aforementioned advantages are obtained with an apparatus and a method for dispensing plant protection products made according to the characteristics of the independent claims; other characteristics are the subject of the dependent claims.

These and further advantages and characteristics of the present invention will be more and better understood by every person skilled in the art thanks to the following description and the attached drawings, provided by way of example but not to be considered in a limiting sense, in which:

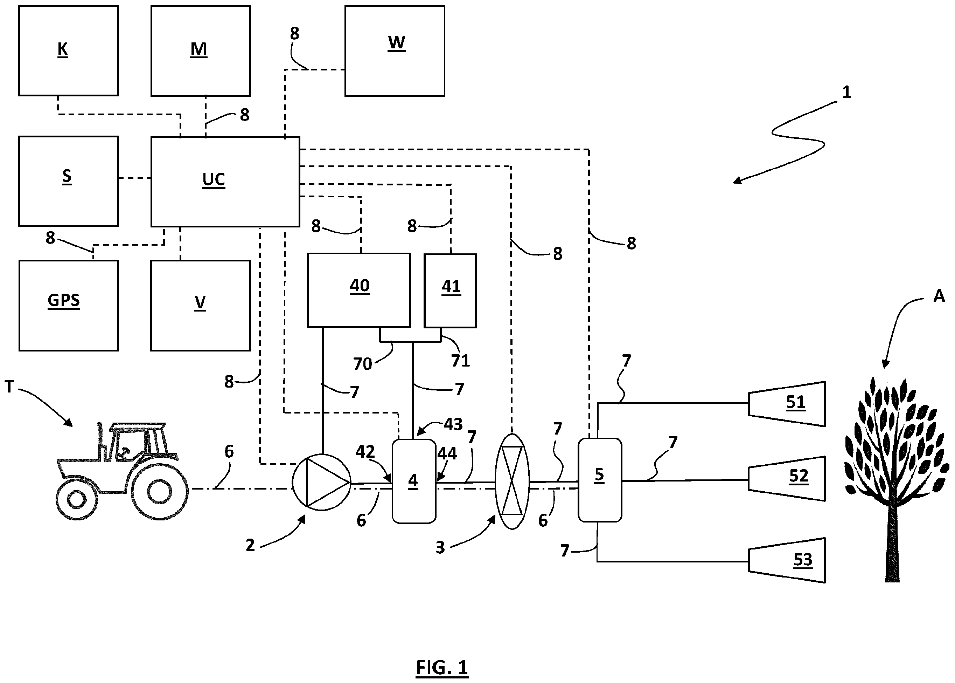

- Fig. 1 is a schematic representation of a possible configuration of an apparatus created in accordance with the invention.

With reference to the attached drawing, in which the components of the invention are represented only schematically, the apparatus (1) in question is intended for the delivery of plant protection products on tree crops.

In its most general configuration, the apparatus (1) includes the following component parts which will be better described below:
- a support structure, which can be associated with a motorization means (T) to be moved according to a treatment direction and to receive motion;
- a turbine group (3) connectable to said motorization means (T) to receive the motion so as to suck in air and determine a flow of air, said turbine group (3) being connected to a plurality of diffusers (51, 52, 53) intended to nebulize a mixture with the air flow received from the turbine unit (3);
- a first tank (40), connected to said turbine group (3) and capable of containing a fluid to compose or constitute the liquid to be atomised;
- a pump (2), connectable to said motorization means (T) to receive the motion, and connected at the inlet to said tank (40) and at the outlet to said plurality of diffusers (51, 52, 53);
- a central processing unit (UC) equipped with a memory (M) with a database relating to the areas to be treated on which to deliver the plant protection products and connected to a localization device (GPS), said central processing unit (UC ) being connected to said pump (2) and/or to said turbine group (3) and/or to said plurality of diffusers (51, 52, 53) so as to regulate the delivery of plant protection products according to the data contained in said memory (M) and the position detected by said localization device (GPS).

The apparatussupport structure (1) is not shown in the drawings; it can consist of a frame that can be carried by a tractor or a frame equipped with wheels so that it can be towed. In practice, the apparatus (1) is supported by a structure which can be associated with a suitable means of motorization (T) equipped with a thermal or electric motor or a combination of the two types of motor. The motorization means serves both to move the apparatus (1) according to a treatment direction and to provide the apparatusitself with motion for the movement of its active parts (pumps, fans, etc.).

The turbine unit (3) can include one or more fans and can be connected to the motorization means (T) (for example the power take-off of a tractor or a generator) to receive the motion and suck in air and determine a flow of air from send to the plurality of diffusers (51, 52, 53) intended to nebulize the mixture thanks to the air flow received from the turbine group (3).

The apparatus (1) includes at least a first tank (40), connected to said turbine group (3) and capable of containing a fluid to compose or constitute the liquid to be atomised; in practice, the apparatus(1) can include the first tank (40) which can contain the mixture to be distributed on the crops or can contain water to be mixed with the plant protection products possibly contained in a second tank (41) and then mixed through relative mixing means (4) which can be differently shaped for the purpose.

The apparatus(1) is equipped with a pump (2), which can also be connected to the motorization means (T) to receive the motion: the pump (2) is connected at the inlet to the tank (40) and at the outlet to the diffusers (51, 52, 53). The connection between the pump and the diffusers can be made with a connection that passes through the mixer (4) and/or the turbine unit (3) and/or a regulator (5) described below.

Advantageously, the apparatus(1) includes a central processing unit (UC) which can be made up of one or more electronic cards equipped with resident software and a memory (M) with a database relating to the areas to be treated on which to deliver plant protection products. The central unit (UC) is equipped with - or connected to - a localization device (GPS). The central processing unit (UC) is also connected to the pump (2) and/or to the turbine group (3) and/or to the diffusers (51, 52, 53): in this way it is possible to regulate the delivery of the products plant protection products based on the data contained in said memory (M) and the position detected by said localization device (GPS).

In Fig. 1, the dotted lines (8) indicate the connection between the central unit (UC) and the parts connected to it; this type of connection can be made using cables or wirelessly.

The dash-dot line (6) indicates the connection that transmits motion from the tractor (T) to the pump (2), to the turbine unit (3), to the dispenser (4) and to the regulator (5). The connection (6) can be made with suitable means depending on the driving force used; in the case of sampling from the power take-off of a tractor (T), a mechanical connection will be provided, for example cardanic; in the case of an electric driving force, the connection (6) may include cables, etc.

The continuous line (7) indicates the pipes or ducts to convey fluids such as, for example, air, water, plant protection product or mixtures of these elements. The sections (70) and (71) indicate two ducts that connect the two tanks (40) and (41) to the main duct (7).

In a possible embodiment, the mixing means (4) can include a dosing pump (4) capable of mixing said substances with water or with another fluid according to predetermined percentages. The dosing pump (4) can be provided with a first inlet (42) connected to the pump (2), of a second inlet (43) connected to the second tank (41), and of an outlet (44) connected to the diffusers (51, 52, 53); in this case, the dosing pump (4) can be equipped with a motor that uses the driving force deriving from the water pressure determined by the pump (2), driven by an electric motor that regulates the flow rate according to the set dose.

In practice, the mixing means can compose the mixture using the water from the first tank (40) and the product from the second tank (41); alternatively, the mixing means (4) can receive water from the pump (2) which takes it from the first tank (40) to mix it with the product which reaches the mixer (4) from the second tank (41).

The data contained in the memory (M) of the central processing unit (UC) are related to the characteristics of the crops in the areas to be treated and are related to the type of crop and/or the time period in which the treatment takes place and/or the type of treatment to be carried out and/or to the treatments already carried out and to be carried out on the same area and/or to the specific area in which the apparatus(1) is located within the treatment area. In other words, the various plots of an agricultural company can be divided according to the crops present so that the treatment carried out is as correct as possible taking into account a plurality of parameters which include the time period in which the treatment has done, the type of treatment to be carried out, the treatments already carried out and to be carried out on the same area and, furthermore, also the specific positioning of a group of plants such as, for example, the row they belong to. The schematic blocks (S) and (K) represent, respectively, a screen (S) and a keyboard (K) which can be connected to the central unit (UC). In this way it is possible to view the treatment already carried out and set, via keyboard or touch-screen, differentiated deliveries based on the most advantageous routes to be followed by the machine as previously described.

The central unit (UC) can also be connected to a wind sensor (V) to modify the output based on the data detected by the sensor (V) and pre-established adjustment parameters referring to the detected characteristics of the wind.

The same central unit (UC) can advantageously be connected to a communication network (W) (for example the Internet) in order to allow remote control, as well as modification of the data and programs contained in said memory (M). In practice, it may be possible, even remotely, to verify and use the data present in memory, modify the resident software, vary delivery parameters, etc. In memory (M), the data relating to the treatments performed can also be stored correlating them to the respective areas in which the treatments were carried out and such data can also be used remotely via the network (W).

Another feature of the apparatus (1) is the possibility of differentiating the treatment in the case of crops that present differences linked not only to the area in which they are located but also to the different conformation of the plant in its vertical development. In practice, the diffusers (51, 52, 53) can advantageously be arranged and configured so as to send the product to different heights by passing the mixture flow through a regulator (5) connected to the central unit (UC) and capable to differentiate the output of the diffusers (51, 52, 53) according to the height and the data/programs present in memory (M). In the diagram used as an example, there are three diffusers (51, 52, 53) and a stylized tree (A) represents a plant that is hit at three different heights by the flows of plant protection product delivered by the nozzles of the three diffusers.

In conclusion, the central unit (UC) is therefore equipped with a memory (M) which contains, for each area to be treated, a prescription map relating to the volume of liquid to be distributed and another map relating to the regulation of said turbine group (3). In other words, these prescription maps contain, for each plot or area to be treated, the data relating to the quantity of mixture to be dispensed, to its percentage of product, considering all the variables indicated previously.

The present invention also relates to a method for dispensing phytosanitary products on tree crops.

In its general formulation, the method is characterized in that it includes the following phases:
a) prepare an apparatusincluding:
   - a support structure, which can be associated with a motorization means (T) to be moved according to a treatment direction and to receive the motion;
   - a turbine group (3) connectable to said motorization means (T) to receive the motion so as to suck in air and determine a flow of air, said turbine group (3) being connected to a plurality of diffusers (51, 52, 53) intended to nebulize a mixture with the air flow received from the turbine unit (3);
   - a first tank (40), connected to said turbine group (3) and capable of containing a fluid to compose or constitute the liquid to be atomised;
   - a pump (2), connectable to said motorization means (T) to receive the motion, and connected at the inlet to said tank (40) and at the outlet to said plurality of diffusers (51, 52, 53);
   - a central processing unit (UC) provided with a memory (M) and connected to said pump (2) and/or to said turbine unit (3) and/or to said plurality of diffusers (51, 52, 53);
   - a localization device (GPS);
b) store in said memory (M) of the central processing unit (UC) a map of the areas to be treated on which to dispense the plant protection products in order to regulate the supply of plant protection products according to the data contained in said memory (M) and the position detected by said localization device (GPS).

Advantageously, the data contained in the memory (M) of said central processing unit (UC) are related to the characteristics of the cultivations of the said areas to be treated and are correlated to the type of cultivation and/or the time period in which the treatment takes place and/or the type of treatment to be carried out and/or the treatments already carried out and to be carried out on the same area and/or the specific area in which the apparatus(1) is located within the treatment area.

Furthermore, a prescription map relating to the volume of liquid to be distributed and an adjustment map relating to the regulation of the turbine group can be stored in memory (M). In other words, the prescription map regulates the quantity of product to be distributed on the crops, while the regulation map acts on the controls of the turbine group to distribute the product where it is required by the treatment.

The data contained in the stored maps can advantageously be used to manage the automatic opening/closing at the beginning/end of the row and to differentiate the progression of the treatment between subsequent rows, allowing the skipping of one or two rows, postponing the treatment to always deliver on vegetation substantially dry, i.e. not yet treated.

As indicated previously, the equipment (1) is able to read the distribution maps (relating to the quantities of liquid and air to be delivered) that have been previously set. The maps supplied to the machine indicate the intensity of delivery of the liquid and the air current to be applied at each point of the plot. To improve the quality of distribution, the control can be divided into different height bands. To achieve this, the machine uses tangential fans, which can be adjusted according to the type of cultivation of the vegetation to be sprayed, which guarantee a straight and homogeneous air flow. The latter can be divided in height with independent control.

Real-time supply monitoring functions are provided to identify any malfunctions and allow the operator to remedy them in order to guarantee the effectiveness of the distribution.

To limit errors in dosing the pesticide, the sprayer communicates electronically with the preparation/mixing station, automatically managing the quantities entered into the tank during refuelling.

To minimize off-target dispersions, automatic functions for activating/deactivating delivery at the end of the row are also included.

By appropriately managing the air flow according to the real needs of the cultivation, fuel can be saved. To increase this saving and limit dispersions in external areas, the fans will be automatically deactivated during turning operations on the edge of the field.

With the present invention it is possible to optimize/minimize the quantity of pesticide distributed and at the same time give guarantees that the distribution carried out is that which was requested via the maps. This action puts the fruit grower in a position to know that he has carried out the treatment correctly.

This main objective of a technical-functional nature is followed by others of an economic-environmental nature, such as the reduction of fuel consumption (and therefore emissions), the containment of the quantities of pesticide distributed, and less operator fatigue.

The execution details may however vary in an equivalent manner in the shape, dimensions, arrangement of the elements, nature of the materials used, without however departing from the scope of the idea of the solution adopted or of the inventive concept and therefore remaining within the limits of the protection granted by the claims that follow.

## Claims

1. Apparatus (1) for dispensing plant protection products on tree crops, including:
- a support structure, which can be associated with a motorization means (T) to be moved according to a treatment direction and to receive motion;
- a turbine group (3) connectable to said motorization means (T) to receive the motion so as to suck in air and determine a flow of air, said turbine group (3) being connected to a plurality of diffusers (51, 52, 53) intended to nebulize a mixture with the air flow received from the turbine unit (3);
- a first tank (40), connected to said turbine group (3) and capable of containing a fluid to compose or constitute the liquid to be atomised;
- a pump (2), connectable to said motorization means (T) to receive the motion, and connected at the inlet to said tank (40) and at the outlet to said plurality of diffusers (51, 52, 53);
**characterized in that** it includes a central processing unit (UC) equipped with a memory (M) with a database relating to the areas to be treated on which to dispense the plant protection products and connected to a localization device (GPS), said central unit processing unit (UC) being connected to said pump (2) and/or to said turbine group (3) and/or to said plurality of diffusers (51, 52, 53) so as to regulate the dispensing of plant protection products according to the data contained in said memory (M) and to the position detected by said localization device (GPS), wherein the data contained in the memory (M) of said central processing unit (UC) are related to the characteristics of the crops of said areas to be treat and are related to the type of cultivation and/or the time period in which the treatment takes place and/or the type of treatment to be carried out and/or the treatments already carried out and to be carried out on the same area and/or the specific area in which it is find the equipment (1) inside the treatment area.

2. Apparatus (1) for dispensing plant protection products according to claim 1, **characterized in that** it includes at least a first tank (40) intended for containing water and a second tank (41) intended for containing the pesticide to be diluted for obtain a mixture to be dispensed on the crops, mixing means (4) being provided, connected to said central processing unit (UC) to dose the percentage of pesticide in the mixture based on the data present in the memory (M) and the position detected by said localization device (GPS).

3. Apparatus (1) for dispensing plant protection products according to claim 2, **characterized in that** said mixing means (4) comprise at least one dosing pump (4) capable of mixing said substances with water or with other fluid according to predetermined percentages; said at least one dosing pump (4) being provided with a first inlet connected to said pump (2), a second inlet connected to said second tank (41), and an outlet connected to said plurality of diffusers (51, 52 , 53), wherein said at least one metering pump (4) is provided with a motor which uses the driving force deriving from the water pressure determined by said pump (2).

4. Apparatus (1) for dispensing plant protection products according to one of the previous claims, **characterized in that** said central unit (UC) is connected to a screen (S) and/or a keyboard (K).

5. Apparatus (1) for dispensing plant protection products according to one of the previous claims, **characterized in that** said central unit (UC) is connected to a wind sensor (V) to modify the dispensing according to the data detected by said sensor (V) and pre-established adjustment parameters referring to the detected characteristics of the wind.

6. Apparatus (1) for dispensing plant protection products according to one of the previous claims, **characterized in that** said central unit (UC) is connected to a communication network (W) so as to allow remote control, as well as modification of the data and programs contained in said memory (M).

7. Apparatus (1) for dispensing plant protection products according to one of the previous claims, **characterized in that** said memory (M) stores the data relating to the treatments carried out by correlating them to the respective areas in which the treatments were carried out.

8. Apparatus (1) for dispensing plant protection products according to one of the previous claims, in which the diffusers of said plurality of diffusers (51, 52, 53) are arranged and configured so as to send the product to different heights, **characterized in that** it includes a regulator (5) for said plurality of diffusers (51, 52, 53), connected to said central unit (UC) to differentiate the delivery of said plurality of diffusers (51, 52, 53) on the crops in function of the quota and data/programs of said memory (M).

9. Apparatus (1) for dispensingplant protection products according to one of the previous claims, **characterized in that** said memory (M) contains, for each area to be treated, a prescription map relating to the volume of liquid to be distributed and a another map relating to the regulation of said turbine group (3).

10. Apparatus (1) for the dispensing of plant protection products according to one of the previous claims, **characterized in that** said turbine unit (3) is of the tangential type and equipped with means suitable for directing the dispensing differently in height.

11. Method for dispensing plant protection products on tree crops, **characterized in that** it includes the following phases:
a) prepare an apparatus including:
- a support structure, which can be associated with a motorization means (T) to be moved according to a treatment direction and to receive the motion;
- a turbine group (3) connectable to said motorization means (T) to receive the motion so as to suck in air and determine a flow of air, said turbine group (3) being connected to a plurality of diffusers (51, 52, 53) intended to nebulize a mixture with the air flow received from the turbine unit (3);
- a first tank (40), connected to said turbine group (3) and capable of containing a fluid to compose or constitute the liquid to be atomised;
- a pump (2), connectable to said motorization means (T) to receive the motion, and connected at the inlet to said tank (40) and at the outlet to said plurality of diffusers (51, 52, 53);
- a central processing unit (UC) provided with a memory (M) and connected to said pump (2) and/or to said turbine unit (3) and/or to said plurality of diffusers (51, 52, 53);
- a localization device (GPS);
b) store in said memory (M) of the central processing unit (UC) a map of the areas to be treated on which to dispense the plant protection products in order to regulate the supply of plant protection products according to the data contained in said memory (M) and the position detected by said localization device (GPS).

12. Method according to claim 11, **characterized in that** the data contained in the memory (M) of said central processing unit (UC) are related to the characteristics of the cultivations of the said areas to be treated and are correlated to the type of cultivation and/or to the time period in which the treatment takes place and/or to the type of treatment to be carried out and/or to the treatments already carried out and to be carried out on the same area and/or to the specific area in which the apparatus (1) is located within the treatment area.

13. Method according to claim 11 and/or 12, **characterized in that** in said memory (M) a prescription map relating to the volume of liquid to be distributed and an adjustment map relating to the regulation of the turbine unit are stored.

14. Method according to one of claims 11 to 12, **characterized in that** the data contained in the stored maps are used to manage the automatic opening/closing at the beginning/end of the row and to differentiate the progression of the treatment between subsequent rows, allowing the skipping one or two rows, postponing the treatment to always deliver on substantially dry vegetation, i.e. not yet treated.
